(19) Europäisches Patentamt
European Patent Office
Office européen des brevets

(11) EP 2 821 727 B1

(12) EUROPÄISCHE PATENTSCHRIFT

(45) Veröffentlichungstag und Bekanntmachung des Hinweises auf die Patenterteilung:
16.03.2016 Patentblatt 2016/11

(51) Int Cl.:
*F24F 12/00* (2006.01)     *F24F 5/00* (2006.01)
*F25B 9/00* (2006.01)

(21) Anmeldenummer: 13003402.8

(22) Anmeldetag: 05.07.2013

(54) **Verfahren zum Betrieb eines Lüftungsheizgerätes und Lüftungsheizgerät**

Method for operating a ventilation heating device and ventilation heating device

Procédé de fonctionnement d'un appareil de chauffage et d'aération et appareil de chauffage et d'aération

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(43) Veröffentlichungstag der Anmeldung:
07.01.2015 Patentblatt 2015/02

(73) Patentinhaber: Stiebel Eltron GmbH & Co. KG
37603 Holzminden (DE)

(72) Erfinder:
• **Brugmann, Johannes, Dr.**
**37671 Höxter (DE)**

• **Schiefelbein, Kai, Dr.**
**37671 Höxter (DE)**
• **Beber, Fabian**
**38165 Lehre (DE)**
• **Schaumlöffel, Michael**
**37671 Höxter (DE)**

(56) Entgegenhaltungen:
WO-A2-2007/080162     DE-A1- 19 851 889
DE-A1-102005 002 282     DE-C2- 19 702 903
DE-U1-202008 008 855

**Beschreibung**

Die Erfindung betrifft ein Verfahren zum Betrieb eines Lüftungsheizgerätes mit Wärmerückgewinnung. Außenluft wird über einen Luft/Luft-Wärmeübertrager geführt und nimmt im Luft/Luft-Wärmeübertrager Wärme von einer Abluft auf. Fortluft wird in Strömungsrichtung aus dem Luft/Luft-Wärmeübertrager kommend als Wärmequelle auf einen Verdampfer einer Wärmepumpe geleitet, um ein in einem Kältemittelkreislauf enthaltenes Kältemittel zu verdampfen. Zur Fortluft kann Außenluft für einen ausreichenden Energieinhalt beigemischt werden.

Weiterhin betrifft die Erfindung ein Lüftungsheizgerät mit einem Luft/Luft-Wärmeübertrager zur Übertragung von Wärmeenergie aus einem Abluftstrom aus zu beheizenden Räumen auf einen Außenluftstrom mit einem in einer Wärmepumpe in einem Kältemittelkreislauf angeordneten Verdampfer, wobei der Verdampfer mit einem Fortluftstrom aus einem Fortluftkanal beaufschlagbar ist. Eine Öffnung für Außenluft ist vor dem Verdampfer vorgesehen, durch die die Außenluft in die Fortluft für einen ausreichenden Energieinhalt als Wärmequelle beigemischt werden kann, Gemäß DE 10 2005 002 282 A1 ist eine Lüftungsanlage mit einem Wärmeübertrager, der von einem Außenluftstrom beaufschlagt ist, bekannt. Der Wärmeübertrager ist ein Luft/Luft-Wärmeübertrager, in dem ein Abluftstrom aus zu beheizenden Räumen Wärmeenergie auf den Außenluftstrom überträgt. Dabei überträgt die aus dem Wärmeübertrager austretende Fortluft Wärmeenergie an ein im Hochdruckbereich (WPKH) des Wärmepumpenkreises (WPK) im überkritischen Zustand betriebenes Kältemittel.

Bei Vorrichtungen der vorstehend bekannten Art wird in dem Wärmepumpenkreis neben einem Wärmeübertrager für die Erhitzung und/oder die Kühlung des Kältemittels ein zweiter Wärmeübertrager 3 und/oder Wärmeübertrager 6 vorgesehen. Aus DE 197 02 903 C2 ist eine Klimaanlage für mehrere Räume mit einem eine Wärmepumpe umfassenden Zentralgerät bekannt. Vorzugsweise ist ein umschaltbarer Kältemittelkreis der Wärmepumpe und ein Luft/Kältemittel-Wärmetauscher vorgesehen, dem Abluft aus den Räumen und/oder Außenluft zuführbar ist Ein Hauptwärmetauscher ist zur Beheizung von Räumen angeschlossen, und Konvektoren sind in einem ersten Heizkreis mit erster Umwälzpumpe angeordnet. Ein Nebenwärmetauscher ist zur Beheizung eines Brauchwasserspeichers in einem zweiten Heizkreis angeordnet.

Die WO 2007/080162 A2 beschreibt eine Kühl- und Belüftungseinrichtung mit einem Lufteinlass und einem Luftauslass, einem Ablufteinlass, einem Abluftauslass, einem Verdampfungswärmetauscher, einer Durchfluss-Steuereinheit und einer Steuerung zum Steuern der Durchfluss-Steuereinheit. Der Lufteinlass ist mit einer Außenluftquelle verbunden. Der Luftauslass ist einem Aufenthaltsraum wie dem Inneren eines Gebäudes oder eines Fahrzeugs zugeführt. Auf diese Weise ist eine Kühlung/Lüftung mittels Verdampfung ermöglicht, wobei lediglich zwei Lufteinlässe und zwei Luftauslässe benötigt werden.

Mit den bekannten Vorrichtungen erfolgt eine Wärmerückgewinnung mit einer Wärmepumpe, die die Wärme der Abluft nutzt. Das Wärmeverteilsystem arbeitet in konventioneller Weise wassergeführt. Weiterhin ist ein Lüftungssystem zur Lüftung vorgesehen. Bei modernen Gebäuden, insbesondere Passivhäusern, werden weiterhin energiesparende Maßnahmen der Gebäudehülle mit entsprechenden Kosten durchgeführt.

Aufgabe der Erfindung ist es, auf effiziente und kostengünstige Weise ein Gebäude zu beheizen, insbesondere mit einer Wärmerückgewinnung.

Gelöst ist die Aufgabe mit den Merkmalen des Anspruchs 1.

Bei einem Verfahren zum Betrieb eines Lüftungsheizgerätes zur Wärmerückgewinnung wird Außenluft über einen Luft/Luft-Wärmeübertrager geführt. Die Außenluft nimmt im Luft/Luft-Wärmeübertrager Wärme von einer Abluft auf und aus dem Luft/Luft-Wärmeübertrager ist Fortluft als eine Wärmequelle auf einen Verdampfer einer Wärmepumpe geleitet. Ein in einem Kältemittelkreislauf enthaltenes Kältemittel wird im Verdampfer verdampft. Zur Fortluft kann vorteilhaft Außenluft für einen ausreichenden Energieinhalt beigemischt werden.

Die Außenluft AU strömt vorteilhaft im Gegenstrom oder Kreuzgegenstrom zur Abluft AB durch den Luft/Luft-Wärmeübertrager.

Es ist gemäß einem anderen Gedanken der Erfindung auch ein Gleichstromprinzip ausführbar.

Die vom Luft/Luft-Wärmeübertrager erwärmte Zuluft mit einer ersten Temperatur $T_{Ge}$ von vorteilhaft ca. 15 - 20 °C wird in einem Lufterhitzer auf eine zweite Temperatur $T_{Ga}$ erwärmt, und die zweite Temperatur $T_{Ga}$ liegt über einer Temperatur $t_{AB}$ der Abluft, insbesondere zwischen 20 und 60 °C, besonders vorteilhaft zwischen 25 und 50 °C.

In einem Gaskühler eines Wärmeaustauschers gibt $CO_2$ als Kältemittel in einem überkritischen Zustand Wärme an ein Wärmeträgermedium ab, welches Wärmeträgermedium zum Lufterhitzer strömt und dort Wärme an die Zuluft abgibt, so dass die Zuluft ZU die Temperatur $T_{Ga}$ erreicht.

Im Gaskühler wird das Kältemittel dabei von einem ersten Zustand mit einer ersten Temperatur ($t_{Üe}$), die überkritisch ist, auf einen zweiten Zustand mit einer zweiten Temperatur ($t_{Üa}$) bei einem nahezu isobaren Druck, der vorzugsweise zwischen 73,8 und ca. 80 bar liegt, abgekühlt. In seiner Strömungsrichtung wird das $CO_2$ im weiteren vor dem Verdampfer durch eine Drossel auf einen Druck unterhalb von ca. 73 bar expandiert.

Gemäß einem Gedanken der Erfindung strömt das $CO_2$ in einer Strömungsrichtung zumindest teilweise entgegen der Strömungsrichtung des Wärmeträgermediums im Gaskühler und das Wärmeträgermedium strömt vorzugsweise entgegen der Zuluft im Lufterhitzer. Das $CO_2$ kühlt sich dabei im Gaskühler vorteilhaft in einem Temperaturband zwischen ca. 90 °C und ca. 20 °C kontinuierlich ab.

Die Zuluft wird im lufterhitzer, der vom Wärmeträgermedium durchströmt wird, in einem Temperaturband mit einem unteren ersten Temperaturwert ($t_{Ge}$) von ca. 15 - ca. 20 °C, insbesondere ca. 17 °C - 19°C, und einem oberen zweiten Temperaturwert ($t_{Ga}$) von ca. 25 °C - ca. 60 °C, insbesondere 30 °C - 50°C kontinuierlich erwärmt.

Die Temperaturverläufe des sich erwärmenden Wärmeträgermediums, oder indirekt der sich erwärmenden Zuluft und des sich abkühlenden $CO_2$ schmiegen sich somit vorteilhaft ohne abrupte Temperatursprünge oder Temperaturrampen aneinander an, und eine Zunahme der Entropie und ein Verlust an Exergie sind bei der Wärmeübertragung minimiert.

Vorteilhaft wird die Drehzahl zumindest eines Verdichters des Kältemittelkreislaufs für einen kontinuierlichen Betrieb des Lüftungsheizgerätes über ein Zeitintervall von insbesondere mehr als ca. 1 h ohne Ein- und Ausschalten geregelt. Die Drehzahl des Verdichters ist dabei nicht an eine konstante Temperatur $t_{Ga}$ der Zuluft gebunden und erfolgt abhängig von einem erforderlichen Wert. Somit wird die Drehzahl insbesondere abhängig von einem Wert eines Leistungsbedarfs, eines Hochdrucks der Wärmepumpe oder einer Temperatur wie der Temperatur $t_{Au}$ der Außenluft oder der Temperatur ($t_R$) der Raumluft geregelt.

In einem vorteilhaften Verfahren wird die Außenluft von einem Vorheizer erwärmt, welcher vom Wärmeträgermedium durchflossen ist.

In einem anderen vorteilhaften Verfahren gibt das $CO_2$ zusätzlich in einem Kältemittelunterkühler eines weiteren Lufterhitzers, der in Strömungsrichtung des Kältemittels hinter dem Gaskühler und vor der Drossel liegt, gerade so viel Enthalpie zur Unterkühlung des Kältemittels vor dem Luft/Luft-Wärmeübertrager an die strömende Außenluft ab, dass wenigstens ein Einfrieren des Luft/Luft-Wärmeübertragers verhindert ist.

Nach einem Gedanken der Erfindung, insbesondere bei tiefen Temperaturen ($t_{AU}$) der Außenluft unter etwa -5 °C ist die Temperatur ($t_{Ga}$) der Zuluft ein Wert, mit dem die Drehzahl des Verdichters derart geregelt wird, dass der Luft/Luft-Wärmetauscher nicht einfriert oder, sofern hierzu vorteilhaft eine höhere Leistung und/oder Drehzahl des Verdichters benötigt wird, wird die Temperatur ($t_{AU}$) der Außenluft hinter dem Vorheizer auf eine Temperatur ($t_{AU}$) von mindestens -5 °C - +3 °C gebracht.

Gemäß einem vorteilhaften Gedanken wird eine Abtauphase des Verdampfers nach Erkennung einer unzulässig starken Vereisung des Verdampfers eingeleitet. Vorteilhaft erfolgt eine Heißgasbypass-Abtauung, wobei der Gaskühler umgangen wird. Beim Abtauen ist dann kein Kältemittel durch den Gaskühler geführt, wodurch eine Abkühlung des Wärmeträgermediums und darüber eine Abkühlung der Zuluft beim Abtauen vermieden ist.

Die Lüftung durch den Luft-Luft-Wärmeübertrager erfolgt beim Abtauen vorteilhaft weiter, insbesondere mit einem kleineren Luftvolumenstrom als im Heizbetrieb. Vorteilhaft wird zumindest ein Zuluftventilator oder ein Ventilator, der Außenluft durch den Luft/Luft-Wärmetauscher bläst, gedrosselt oder angehalten. Soweit ausreichend Wärme in einem Pufferspeicher enthalten ist, in dem das Wärmeträgermedium gespeichert werden kann, erfolgt vorteilhaft keine Reduzierung des Luftvolumenstroms oder eine definierte Reduzierung des Luftvolumenstroms in Abhängigkeit des verfügbaren Wärmeinhalts des Pufferspeichers oder abhängig von der Temperatur des Wärmeträgermediums.

Vorteilhaft ist es weiterhin, insbesondere in einem Zeitraum von ca. 5 Minuten und ca. einer Stunde vor einer Warmwasserbereitung, bei der das Kältemittel durch einen Gaskühler zu einer Warmwasserbereitung, bei der das Wärmeträgermedium durch einen Warmwasserwärmeaustauscher für Warmwasser geleitet ist, eine zeitweise Anhebung der Temperatur $t_{GA}$ der Zuluft über einen berechneten Solltemperaturwert $t_{GAsoll}$ der Zuluft oder der Raumtemperatur $t_{Rsoll}$ um etwa 0,1 - 1,5 °C, insbesondere ca. 0,5 °C, hinaus erfolgt. Dadurch wird ein Gebäude vor der Warmwasserbereitung überheizt und kann sich während der Warmwasserbereitung, insbesondere wenn der Luftstrom der Außenluft gestoppt oder gedrosselt ist, etwa auf die gewünschte Raumtemperatur $t_R$ wieder abkühlen.

Während der Warmwasserbereitung wird vorteilhaft nur so viel Wärme an die Außenluft oder Zuluft abgegeben wie im Speicher verfügbar ist oder es wird sehr wenig oder gar keine Wärme an die Zuluft abgegeben, wenn der Speicher leer ist.

Gemäß einem anderen Gedanken der Erfindung wird auch bei der Warmwasserbereitung im Nachgang eine Kältemittelunterkühlung durchgeführt. Das Wärmeträgermedium wird erst dem Warmwasserwärmeaustauscher zugeführt und strömt danach in einen Puffer oder einen Lufterhitzer oder Luftvorwärmer, wodurch das Wärmeträgermedium derart stark abgekühlt wird, dass es das Kältemittel im Gaskühler nicht nur kondensiert, sondern auch unter den Kondensationspunkt weiter unterkühlt.

In einem anderen vorteilhaften Ausführungsbeispiel sitzt ein Kältemittelunterkühler im Außenluftstrom vor dem Luft/Luft-Wärmeübertrager und dient dazu wenigstens so viel Wärme an die Außenluft abzugeben, dass der Luft-Luft-Wärmeaustauscher gerade nicht vereist.

Im Falle der Warmwasserbereitung ist es vorteilhaft, den Luftvolumenstrom der Zuluft zu drosseln, damit weniger Energie für die Eisfreihaltung benötigt wird und mehr Energie für die Warmwasserbereitung bereit steht Die Außenluft wird vorteilhaft auf eine Temperatur von -5 bis +3 °C erwärmt.

Ein Gaskühler des Kältemittelkreislaufs ist vorteilhaft in einem Wärmeträgerkreislauf angeordnet und der Wärmeträgerkreislauf ist auch mit dem Zuluftkanal zumindest wärmetechnisch verbunden. Der Vorheizer ist in Luftströmungsrichtung einer Zuluft hinter dem Luft/Luft-Wärmetauscher angeordnet.

Vorteilhaft ist in einem anderen Ausführungsbeispiel ein Lüftungsheizgerät mit einem Luft/Luft-Wärmeübertrager zur Übertragung von Wärmeenergie aus einem Abluftstrom aus zu beheizenden Räumen auf einen Außenluftstrom vorgeschlagen. In einer Wärmepumpe ist in einem Kältemittelkreislauf ein Verdampfer angeordnet. Der Verdampfer ist mit einem Fortluftstrom aus einem Fortluftkanal beaufschlagbar. Weiterhin ist vorteilhaft eine Öffnung für Außenluft vor dem Verdampfer vorgesehen, durch die die Außenluft in die Fortluft für einen ausreichenden Energieinhalt als Wärmequelle beigemischt werden kann. Die Außenluft wird vorteilhaft nach einem Venturi-Prinzip in die mit einer Geschwindigkeit strömende Fortluft angesaugt oder auch mittels eines Ventilators der Fortluft beigemengt.

Der Anteil der Außenluft beträgt etwa das 0- bis 5-fache des Volumenstroms der Fortluft, bei einer Außentemperatur von ca. 10 °C vorteilhaft etwa das 0,5-fache, bei 0 °C etwa das 0,8-fache und bei -10 °C etwa das 1-fache der Fortluft.

Im Kältemittelkreislauf ist $CO_2$ als Kältemittel eingefüllt, und Wärme wird im Heizbetrieb vom überkritischen $CO_2$ als Kältemittel auf das Wärmeträgermedium und vom Wärmeträgermedium auf die Zuluft vorteilhaft vor und hinter dem Luft/Luft-Wärmetauscher übertragen.

Gemäß einem Gedanken der Erfindung ist das Lüftungsheizgerät dadurch gekennzeichnet, dass ein Kältemittelunterkühler in Strömungsrichtung hinter dem Gaskühler und vor der Drossel angeordnet ist. Der Kältemittelunterkühler ist in Strömungsrichtung der Außenluft vor dem Luft/Luft-Wärmeübertrager angeordnet, und durch Abgabe von Enthalpie wird das überkritische $CO_2$ unterkühlt, und ein Einfrieren des Luft/Luft-Wärmetauscher ist verhindert.

Vorteilhaft wird im Kältemittelunterkühler eine Enthalpie von ca. 0 bis 50 kj/kg vom Kältemittel an die Außenluft oder das Wärmeträgermedium abgegeben. Die Luft oder das Wärmeträgermedium erwärmt sich dabei auf bis zu ca. -5 bis +3 °C. Dabei kann die Außenluft durchaus Temperaturen von bis zu unter -20 °C aufweisen, so dass dabei ein Temperaturhub von bis zu 15 K oder mehr erfolgt.

Gemäß einem vorteilhaften Gedanken der Erfindung ist ein Gebäude mit einem entsprechenden Luftheizgerät und einem an das Luftheizgerät angeschlossenes Luftverteilsystem ausgestattet und mit Luft beheizt. Das Gebäude weist einen spezifischen Wert des Wärmebedarfs $Q_a$ von weniger als 20 kWh/m² pro Jahr auf. Das Lüftungsheizgerät des Gebäudes eine thermische Leistung auf, die sich aus der Multiplikation der Wohnfläche $m_W$ des zu beheizenden Gebäudes in Quadratmetern [m²] mit dem spezifischen Wert des Wärmebedarfs geteilt durch einen Korrekturwert K ergibt. Der Korrekturwert K liegt vorteilhaft zwischen 500/a und 3000/a, insbesondere zwischen 1000/a und 2000/a und besonders vorteilhaft zwischen 1200/a und 1500/a. Das Ergebnis wird noch durch 1000 geteilt wodurch sich etwa die Heizleistung des Lüftungsheizgerätes in Watt ergibt. Der Korrekturwert ist weiterhin vorteilhaft abhängig von der Personenanzahl oder dem Warmwasserverbrauch des Gebäudes.

Somit wird bei einem Gebäude mit 200 m² Wohnfläche und einem spezifischen Wärmebedarf von 10 kWh/a und bei einem Normpunkt von -15 °C Außentemperatur die Heizleistung des Luftheizgerätes wie folgt ermittelt:

$$200 \text{ m}^2 * 10 \text{ kWh/m}^2a = 2000 \text{ kWh/a}$$

Der jahreswärmebedarf beträgt somit 2000 kWh/a. Dieser Wert wird durch einen Korrekturfaktor K=1400/a dividiert und durch 1000 dividiert:

$$2000 \text{ kWh/a} / 1400/a / 1000 = 1429 \text{ W}$$

Somit ergibt sich eine Heizleistung des Lüftungsheizgerätes von wenigstens 1429 W, die über Zuluft in das Gebäude.

In der Regel sind Heizlüftungsgeräte mit stufigen Heizleistungen verfügbar. Seitens des Geräteherstellers wir ein Gerät in das Gebäude verbracht, welches vorteilhaft mindestens die erforderliche Heizleistung aufweist

Weitere vorteilhafte Ausgestaltungen werden nachfolgend anhand von Ausführungsbeispielen der Erfindung unter Bezugnahme auf die Abbildungen näher beschrieben. Es zeigen:

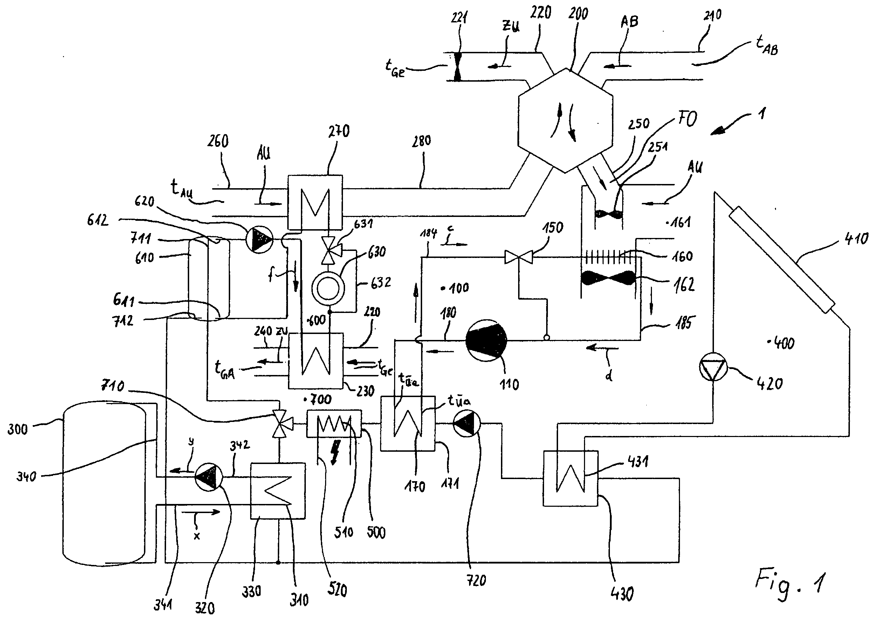

Figur 1 ein schematisches Schaltbild einer ersten Ausführungsform der Erfindung,

Figur 2 ein zu dem Wärmepumpenkreis von Fig. 1 gehöriges Druck-Enthalpie-Diagramm,

Figur 3 einen angeschmiegten Temperaturverlauf des überkritischen $CO_2$ an das sich aufwärmende Wärmeträgermedium,

Figur 4 ein schematisches Schaltbild einer zweiten Ausführungsform der Erfindung im Heizbetrieb

Figur 5 ein schematisches Schaltbild einer zweiten Ausführungsform der Erfindung im Abtaubetrieb.

Ein Lüftungsheizgerät 1 weist einen Kältemittelkreislauf 100 und wenigstens einen Luft/Luft-Wärmeübertrager 200 auf. Vorteilhaft ist im Ausführungsbeispiel weiterhin ein Warmwasserbehälter 300 angeschlossen.

Im Ausführungsbeispiel ist noch eine Solaranlage 400 über einen Solarwärmeaustauscher 430 angeschlossen. Der Kältemittelkreislauf 100 weist einen Verdichter 110, einen Verdampfer 160 und eine Drossel 150 auf. Ein Gaskühler 170 ist angeschlossen, der sich in einem Wärmeaustauscher 171 für ein Wärmeträgermedium, insbesondere Wasser befindet. Der Gaskühler 170 für das Wärmeträgermedium ist über eine Zuleitung 180 und eine Leitung 184 für Kältemittel an den Kältemittelkreislauf 100 angeschlossen. Weiterhin ist der Verdichter 110 über eine Leitung 185 mit dem Verdampfer 160 verbunden. Dieser Verdampfer 160 ist wiederum mit der Drossel 150 verbunden, wobei die Drossel 150 in Strömungsrichtung c des Kältemittels vor dem Verdampfer 160 liegt. In Strömungsrichtung c betrachtet liegt die Drossel 150 hinter dem Gaskühler 170. Vor dem Verdampfer 160 des Kältemittelkreislaufs 100 ist eine Öffnung 161 vorgesehen, über die dem Verdampfer 160 Außenluft AU zuführbar ist.

Außenluft AU wird einem Vorheizer 270 mit einer Außenlufttemperatur $t_{au}$ durch einen Kanal 260 zugeführt. Die Außenluft AU durchströmt den Vorheizer 270 und erwärmt sich dabei. Über einen Außenluftkanal 280 strömt die Außenluft dann weiter zum Luft/Luft-Wärmeaustauscher 200. Diesem Luft/Luft-Wärmeaustauscher 200 wird weiterhin Abluft AB mit einer Ablufttemperatur $t_{AB}$ über einen Abluftkanal 210 zugeführt. Mit der Abluft AB wird die Außenluft AU bei einer stofflichen Trennung erwärmt. Es erfolgt im Luft/Luft-Wärmeaustauscher 200 ein Wärmeübergang von der Abluft AB auf die Außenluft AU. Die so erwärmte Außenluft AU wird von einem Zuluftventilator 221 durch einen Zuluftkanal 220 gefördert und tritt mit einer Temperatur $T_{Ge}$ der Zuluft ZU in den Lufterhitzer 230 ein. Im Lufterhitzer 230 wird die Zuluft ZU auf die Temperatur $T_{Ga}$ erwärmt und strömt weiter als Zuluft ZU mit ca. 25 bos 50 °C über einen Zuluftanschluss 240 in ein nicht dargestelltes Gebäude bzw. in ein nicht dargestelltes Luft-Verteilungssystem eines Gebäudes.

Die im Luft/Luft-Wärmeaustauscher 200 abgekühlte Abluft AB strömt als Fortluft FO aus dem Luft/Luft-Wärmeaustauscher 200 aus. Gefördert wird die Fortluft mit einem Fortluftventilator 251. Der Fortluftkanal 250 ist im Ausführungsbeispiel so auf den Verdampfer 160 gerichtet oder mit dem Verdampfer 160 verbunden, dass die Fortluft FO auf den Verdampfer 160 geleitet ist. Vorteilhaft ist es weiterhin, zur Fortluft FO Außenluft AU hinzu zumischen. Diese Außenluft AU wird im Ausführungsbeispiel durch das Venturi-Prinzip in die strömende Fortluft FO gemischt und diese Mischung aus Fortluft FO und Außenluft AU dem Verdampfer 160 zugeführt.

Im normalen Heizbetrieb ist der Gaskühler 170 für das Wärmeträgermedium von Kältemittel durchströmt, welches vom Verdichter 110 von einem niedrigen Druck, insbesondere von ca. 20 - 50 bar, in der Leitung 185 auf einen hohen Druck, insbesondere von über 73 bar, in der Zuleitung 180 verdichtet wird. Im Gaskühler 170 für Wärmeträgermedium wird Wärme vom Kältemittel auf das Wärmeträgermedium übertragen und danach vom Wärmeträgermedium auf die Zuluft ZU.

In einem nicht dargestellten Ausführungsbeispiel strömt das Kältemittel weiterhin zu einem nicht dargestellten Kältemittelunterkühler, der im Außenluftkanal 260 sitzt. Hier wird das Kältemittel weiter durch die kalte Außenluft AU mit der Außenlufttemperatur $t_{AU}$ unterkühlt und strömt dann weiter in Strömungsrichtung c zur Drossel 150, wo es dann entspannt wird und zumindest dann in einem flüssigen Zustand in den Verdampfer 160 geleitet wird.

Der Gaskühler 170 liegt in einem Wärmeaustauscher 171 für das Wärmeträgermedium. Der Gaskühler 170 ist eingebunden in einen Ladekreislauf 700. Im Ladekreislauf 700 liegt weiterhin eine Ladepumpe 720, welche dafür vorgesehen ist, im Betrieb des Luftheizgerätes 1 ein Wärmeträgermedium, insbesondere Wasser, im Ladekreislauf 700 umzupumpen. Im Ausführungsbeispiel enthält der Ladekreislauf 700 einen Elektroheizer 500, der mit einem Elektroheizkörper 510 sowie einen Elektroanschluss 520 ausgestattet ist. Hierdurch kann optional eine elektrische Nacherwärmung des Wärmeträgermediums erfolgen, falls z.B. im Gaskühler 170 nicht ausreichend Wärme auf das Wärmeträgermedium übertragen wurde. Weiterhin ist im Ladekreislauf 700 ein Dreiwegeventil 710 angeordnet, welches die Durchströmung des Wärmeträgermediums zu einem Warmwasser-Wärmeaustauscher 330 oder zu einem Pufferspeicher 610 ermöglicht.

Im Falle einer Warmwasserheizung oder Warmwassererwärmung, ist das Dreiwegeventil 710 so geschaltet, dass das Wärmeträgermedium ausschließlich oder zumindest zu einem Anteil zum Warmwasser-Wärmeaustauscher 330 geleitet ist.

Im Falle des Heizbetriebs, ist das Dreiwegeventil 710 so geschaltet, dass das Wärmeträgermedium zum Pufferspeicher 610 geleitet ist.

Desweiteren weist der Ladekreislauf 700 im Ausführungsbeispiel einen Solar-Wärmeaustauscher 430 der Solaranlage 400 auf. Die Solaranlage 400 ist über den Solar-Wärmeaustauscher 430 mit dem Ladekreislauf 700 verbunden. In einem im Solar-Wärmeaustauscher 430 befindlichen Solar-Wärmeträgermedium-Kühler 431 wird das Wärmeträgermedium, welches im Ladekreislauf 700 umläuft, erwärmt. Ein Solar-Wärmeträgermedium, welches sich in der Solaranlage 400 befindet, wird im Betrieb durch eine Solar-Wärmepumpe 420 umgepumpt.

Zur Warmwasserbereitung ist ein Warmwasserbehälter 300 vorgesehen. Der Warmwasserbehälter 300 ist über einen Warmwasser-Wärmeaustauscher 330 wärmetechnisch mit dem Ladekreislauf 700 verbunden. Im Warmwasser-Wärmeaustauscher 330 ist ein Warmwasserkörper 310 enthalten, der Wärme vom Wärmeträgermedium des Ladekreislaufs 700 aufnimmt. Das im Warmwasserbehälter 300 befindliche Wasser wird mit einer Umwälzpumpe 320 im Ladebetrieb erwärmt. Dies erfolgt insbesondere, wenn das Dreiwegeventil 710 des Ladekreislaufs 700 so geschaltet ist, dass das Wärmeträgermedium zum Warmwasser-Wärmeaustauscher 330 geleitet ist. In diesem Fall wird das von der Umwälzpumpe 320 umgepumpte Warmwasser durch den Warmwasserkörper 310 geleitet und vom Wärmeträgermedium, insbesondere im Gegenstrom Prinzip, erwärmt. Das Warmwasser strömt dann durch die Wasserleitungen 340, 341 und 342.

Im Falle der Heizung, insbesondere Luftheizung wird das Wärmeträgermedium im Ladekreislauf 700 von der Ladepumpe 720 über das Dreiwegeventil 710 zum Pufferspeicher 610 geleitet. Es tritt in den Pufferspeicher 610 durch den Wärmeträgereinlass 711 ein. Das Wärmeträgermedium tritt aus dem Pufferspeicher durch den Wärmeträgerauslass 712 wieder aus und strömt vorteilhaft zumindest teilweise oder ganz zurück zum Wärmeaustauscher 171 für das Wärmeträgermedium.

Im Ausführungsbeispiel durchströmt das Wärmeträgermedium vorteilhaft auch den Solar-Wärmeaustauscher 430.

Ausgehend vom Pufferspeicher 610 wird das Wärmeträgermedium mittels einer Pufferpumpe 620 durch einen Wärmeträgerkreislauf 600 geleitet. Zunächst strömt das Wärmeträgermedium durch den Lufterhitzer 230, in dem die Zuluft vorteilhaft im Gegenstormprinzip von einer Temperatur $t_{Ge}$ auf eine Temperatur $t_{Ga}$ angehoben wird.

Der Pufferspeicher 610 dient dazu, insbesondere überschüssige Heizenergie zu speichern und später bei einem abgeschalteten Verdichter oder beim Abtauen abzugeben. Dabei wird der Pufferspeicher 610 vorteilhaft so be- und entladen, dass ein hoher Temperaturgradient zwischen Pufferaustritt 612 in den Heizkreis und Puffereintritt 611 aus dem Heizkreis, bzw. dem Wärmeträgerkreislauf 600 erhalten bleibt, um den transkritischen Prozess im $CO_2$ Kältemittelkrislauf zu optimieren.

Weiterhin strömt das Wärmeträgermedium im Wärmeträgerkreislauf 600 vorteilhaft zu einem Heizkreis 630, der über einen Bypass 632 vorteilhaft umgeh bar ist. In einem anderen nicht dargestellten Ausführungsbeispiel ist anstelle des Heizkreises 630 des Dreiwegeventils 631 und des Bypasses 632 zumindest ein Rohr zur Durchleitung des Wärmeträgermediums vorgesehen.

Das Wärmeträgermedium strömt vorteilhaft weiter zum Vorheizer 270. Nachdem das Wärmeträgermedium den Vorheizer 270 durchströmt hat, strömt es durch den Wärmeträgereinlass 611 wieder in den Pufferspeicher 610 zurück.

Der Vorheizer 270 ist vorteilhaft direkt von Außenluft AU beaufschlagt und an einem Außenluftanschluss 260 angeschlossen. Die Zuluft strömt dann vorteilhaft durch einen Luftkanal 280 zum Luft-Luft-Wärmeübertrager 200 und danach über den Zuluftkanal 220 zum Lufterhitzer 230, durchströmt den Lufterhitzer 230, tritt vom Lufterhitzer 230 vorteilhaft in einem Zuluftanschluss 240 ein und strömt dort weiter.

Im Kältemittelkreislauf 100 wird das im Gaskühler 170 abgekühlte $CO_2$ im Verdampfer 160, dem die Fortluft FO und/oder Außenluft AU oder eine Mischung daraus zugeführt wird, wieder verdampft und strömt in Richtung d in der Leitung 185 zum Verdichter 110. Somit wird der am Ende einem Raum zugeführten Zuluft ZU vorteilhaft in mehrfacher Weise Wärme zugeführt, erstens im Vorheizer 270, insbesondere um hier sicherzustellen, dass der Luft/Luft-Wärmeaustauscher 200 nicht einfriert, zweitens im Luft/Luft-Wärmeaustauscher 200 die dort als Außenluft AU eingetretene Luft Wärme von der Abluft AB aufnimmt, und eine dritte Erwärmung erfährt die dann als Zuluft ZU bezeichnete ehemalige Außenluft AU im Lufterhitzer 230, so dass eine Zulufttemperatur bereitgestellt wird, die über der geforderten Raumtemperatur liegt.

Vorteilhaft erfolgt eine weitere Erwärmung der Zuluft ZU durch den Zuluftventilator 221, denn die im Zuluftventilator 221 umgesetzte Energie wird nicht vollständig in Strömungsenergie umgesetzt. Verlustbehaftete Wärmeenergie wird an dieser Stelle des Zuluftventilators 221 ebenfalls als Wärme der Zuluft ZU zugeführt. Diese sozusagen vierte Lufterwärmung ist im Vergleich zu den drei anderen Erwärmungen der Zuluft allerdings sehr gering.

Im Ausführungsbeispiel ist eine Luftheizung gezeigt, mit der ein Gebäude heute mit einem geringen Wertwärmebedarf wie bei einem Passivhaus von ca.1-2 kWh bei einer Außentemperatur von ca. -10 bis -15 °C beheizt werden kann. Bei Passivhäusern mit geringem Wärmebedarf von 20 kWh/m² und Jahr und weniger kann mit der Luftheizung vorteilhaft eine vollständige Beheizung erfolgen. Der Vorteil der Erfindung liegt insbesondere darin, dass nur mit Luft geheizt wird und auf ein mit Wasser gefülltes Verteilsystem verzichtet werden kann. Die gesamte Wärme, die dem Gebäude zur Heizung zugeführt wird, wird über die Zuluft ZU in das Gebäude abgegeben. Daher wird die Zuluft ZU bei einer Außentemperatur von ca. -10 oder -15 °C auf etwa 40 bis 60 °C, insbesondere etwa 50 °C erhitzt. Bei einem Gebäude zwischen 150 und 200 m² Wohnfläche erfolgt eine vollständige Beheizung ausschließlich über die Zuluft ZU. Vorteilhaft wird mit dem System, wie bereits beschrieben insbesondere bei niedrigen Temperaturen, Fortluft FU und vorzugsweise zugemischte Außenluft AU als Mischluft dem Verdampfer 160 zugeführt. Bei einer Mischung von Fortluft zu Außenluft ergibt sich bei einer Außentemperatur von ca. -15 °C und einer Fortlufttemperatur von ca. -10 °C eine etwas über der Außenluft liegende Temperatur, die dem Verdampfer zugeführt wird. Die Außenluft wird vorteilhaft bereits durch den Vorheizer 270 vorgewärmt und weitere große Wärmemengen werden im Luft/Luft-Wärmeaustauscher 200 aufgenommen. Zuluft ZU tritt bereits mit einer Temperatur von ca. 18 °C (15-20 °C) in den Lufterhitzer 230 ein und wird hier dann auf bei - 15 °C der Außenluft AU auf vorzugsweise über 40 °, insbesondere um die 50 °C erwärmt. Bei der beschriebenen Verwendung von $CO_2$ als Kältemittel ergibt sich ein besonderer Vorteil durch geringe Exergieverluste und durch einen relativ geringen Anstieg der Entropie. Insbesondere dadurch, dass die Luft im Lufterhitzer 230 nur von ca. 15-20 °C auf ca. 30-50 °C erwärmt werden muss.

Vorteilhaft ist der Verdampfer 160 der Wärmepumpe mit einem Luftstrom beaufschlagt, der zusätzlich von einem Verdampferventilator 162 erzeugt ist.

Der Verdampferventilator 162 kann insbesondere auch als Fortluftventilator 251 arbeiten und fördert dann Fortluft F0 und Außenluft AU allein, wobei der Fortluftventilator entfällt. In einem anderen vorteilhaften Ausführungsbeispiel ist der Verdampferventilator zusätzlich zum Fortluftventilator angeordnet. Weiterhin ist gemäß einem vorteilhaften Ausführungsbeispiel nur ein Fortluftventilator 251 vorgesehen, der insbesondere in Kombination mit der Öffnung 161 auch Außenluft zumindest indirekt ansaugt und auf den Verdampfer fördert.

Die im Warmwasserwärmetauscher 330 angeordnete Wasserführung nimmt Wärme aus dem Pufferspeicher 610 auf und ein in den Leitungen 340, 341, 342 strömendes Brauchwasser wird so erwärmt. Das Brauchwasser fließt entweder wie im Ausführungsbeispiel direkt in einen Warmwasserbehälter 300 auf oder wird indirekt mit einem im Warmwasserbehälter 300 angeordneten Wärmeaustauscher aufgewärmt. Das Wasser wird in den Leitungen 340, 341, 342 durch eine Umwälzpumpe 320 umgetrieben. Die Warmwasserbereitung erfolgt vorteilhaft so lange, bis eine Warmwasser-Solltemperatur im Warmwasserbehälter 300 erreicht ist.

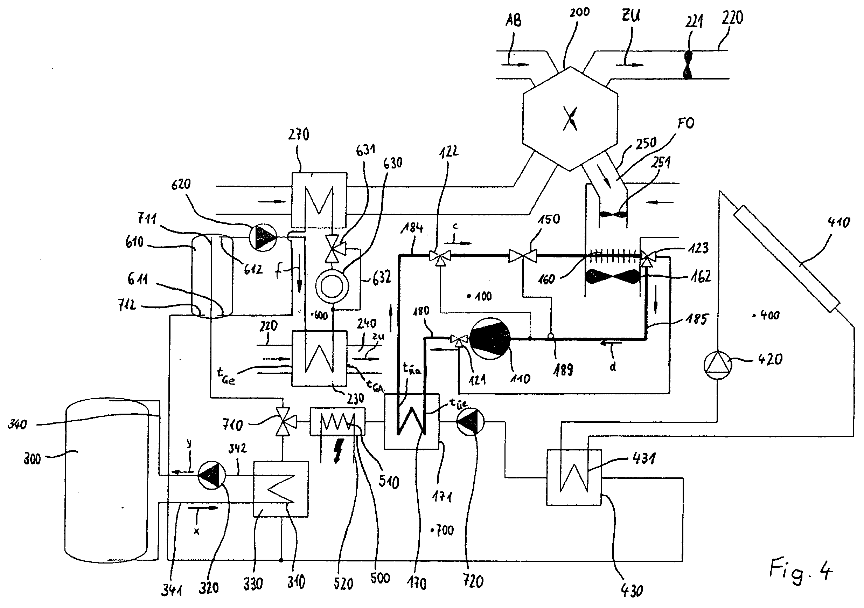

In einem anderen Ausführungsbeispiel gemäß Fig. 4 sind drei weitere Dreiwegeventile 121, 122 und 123 vorgesehen, mit denen eine sogenannte Heißgasabtauung des Verdampfers 160 erfolgt. Ein zweites Dreiwegeventil 121 ist nach dem Verdichter 110 angeordnet. Zum Abtauen wird das Dreiwegeventil 121 so geschaltet, dass das Kältemittel direkt zum Verflüssiger 160 geleitet wird. Dabei durchströmt es ein drittes Dreiwegeventil 123 direkt zum Verdampfer 160. Dort wird die im Verdichter aufgenommene Wärme im Verdampfer 160 zum Abtauen abgegeben. Somit durchströmt das Kältemittel im Zustand des Abtauens nur den Verdichter 110, den Verdampfer 160 sowie die Drossel 150. Der Gaskühler 170 für das Wärmeträgermedium wird vorteilhaft nicht durchströmt. Ein viertes Dreiwegeventil 122 ist so gestellt, dass das Kältemittel vom Verdampfer 160 zum Verdichter 110 geführt ist.

Im Heizbetrieb ist gemäß diesem Ausführungsbeispiel das zweite Dreiwegeventil 121 so gerichtet, dass das Kältemittel zum Gaskühler 170 strömt. Vom Gaskühler 170 für das Wärmeträgermedium strömt das Kältemittel weiter zum vierten Dreiwegeventil 122, welches im Heizbetrieb so gestellt ist, dass das Kältemittel direkt zur Drossel 150 strömt, dort expandiert wird und dann in den Verdampfer 160 strömt. Ausgehend vom Verdampfer 160 strömt das Kältemittel zum dritten Dreiwegeventil 123, welches dann so gestellt ist, dass das Kältemittel in Strömungsrichtung d direkt zum Verdichter 110 strömt.

An einem Knoten 189 strömt das Kältemittel vorteilhaft weiter direkt zum Verdichter 160, da das vierte Dreiwegeventil aus dieser Richtung geschlossen ist.

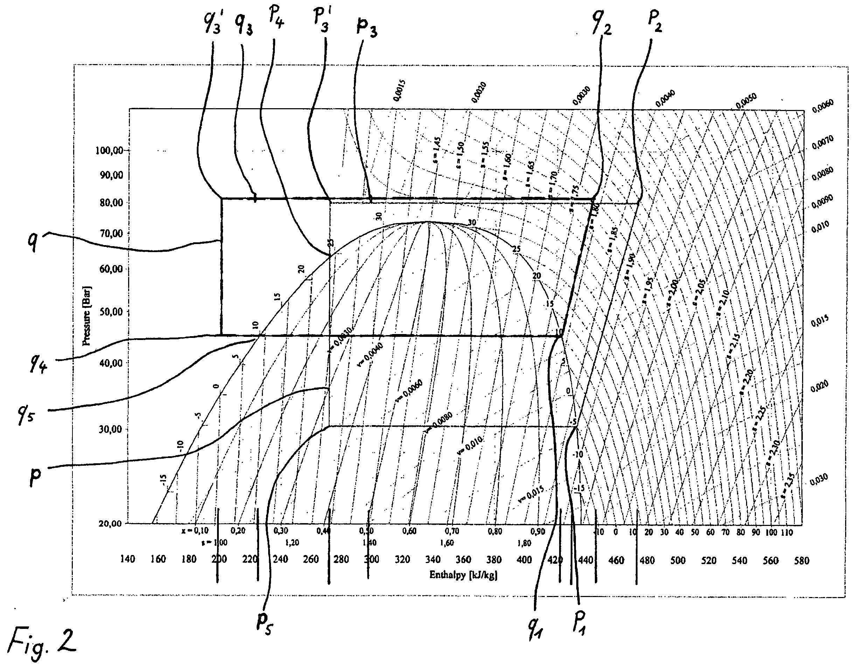

Gemäß Fig. 2 sind zwei beispielhafte Verfahren bei beispielhaften Temperaturen gezeigt. Ein erster Kreisprozess q bezieht sich auf eine Außentemperatur von um die 10 - 15 °C bei einer in der Regel gewünschten Raumtemperatur von ca. 20 - 22 °C. Ausgehend von einem Punkt q1 beträgt die Energie des Kältemittels 425 kj/kg bei ca. 10 °C und ca. 45 bar. Das Kältemittel wird auf einen Punkt q2 mit einer Enthalpie von ca. 438 kj/kg bei ca. 55 °C und ca. 80 bar verdichtet. Vom Verdichter aus wird das Kältemittel zum Gaskühler 170 für das Wärmeträgermedium geleitet und gibt hier Enthalpie ab, so dass das aus dem Gaskühler 170 für das Wärmeträgermedium austretende Kältemittel etwa eine Enthalpie von 220 kj/kg an einem Punkt q3 mit ca. 10 °C und ca. 80 bar aufweist.

Eine weitere optionale Unterkühlung bzw. Wärmeabgabe des Kältemittels kann hin zu einem Punkt q3' erfolgen, an dem das Kältemittel eine Enthalpie von 200 kj/kg mit ca. 0 °C bei ca. 80 bar aufweist. In einem nicht dargestellten Kältemittelunterkühler hat das Kältemittel etwa eine Enthalpie von ca. 220 auf ca. 200 kj/kg an die Außenluft AU abgegeben.

Danach strömt das Kältemittel zur Drossel 150 und es erfolgt ausgehend vom Punkt q3' eine Expansion im idealisierten Zustand auf einer Enthalpie von ca. 200 kj/kg zum Punkt q4 mit einem Druck von etwa 43 bar und einer Temperatur von ca. 0 °C. Das Kältemittel strömt weiter zum Verdampfer 160, wo es vom Zustand q4 wieder in die Enthalpie von 200 auf 425 kj/kg bei einem Druck von ca. 45 bar und auf eine Temperatur von 10 °C ansteigt.

Der zweite Prozess p, der in Fig. 2 dargestellt ist, betrachtet in etwa eine Außentemperatur von -5 - -15 °C. insbesondere ca. -10 °C. Dann wird dem Verdampfer 160 Außenluft AU und Fortluft FO so zugeführt, dass die Mischtemperatur der dem Verdampfer zugeführten Mischung aus Außenluft AU und Fortluft FO etwas über der Temperatur $t_{AU}$, insbesondere bei ca. 1 - 5 °C liegt. Ausgehend von einer Enthalpie von 275 kj/kg an einem Punkt p5 nimmt das Kältemittel im Verdampfer 160 Enthalpie bis zu einem Wert von ca. 438 kj/kg oder 440 kj/kg auf. Dann wird das Kältemittel vom Punkt p1 mit -5 °C bei ca. 30 bar auf den Punkt p2 mit 68 °C und ca. 80 bar verdichtet, wodurch eine weitere Enthalpie-Zunahme auf ca. 475 kj/kg erfolgt. Am Punkt p2 beträgt der Druck etwa 80 bar, wodurch das Kältemittel ausgehend vom Punkt p1 grob um ca. 50 bar im Druck angehoben ist. Desweiteren strömt das Kältemittel nun durch den Gaskühler 170 für das Wärmeträgermedium und die Enthalpie wird vom Punkt p2 auf einen Punkt p3 auf ca. 290 kj/kg bei 30 °C und ca. 80 barreduziert. Es erfolgt eine weitere optionale Reduzierung auf ca. 275 kj/kg bei ca. 27 °C und ca. 80 bar erfolgt dann im Gaskühler 170 oder in einem nicht dargestellten Kältemittelunterkühler. Das Kältemittel wird der Drossel 150 zugeführt, wo es im Druck von ca.

80 bar auf ca. 30 bar bei ca. -5 °C reduziert wird. Die Druckreduktion erfolgt hier in idealisierter Weise isenthalp. An einem Punkt p5 bei ca. 60 bar und einer Enthalpie von ca. 275 kj/kg geht das Kältemittel $CO_2$ in den Nassdampfzustand über.

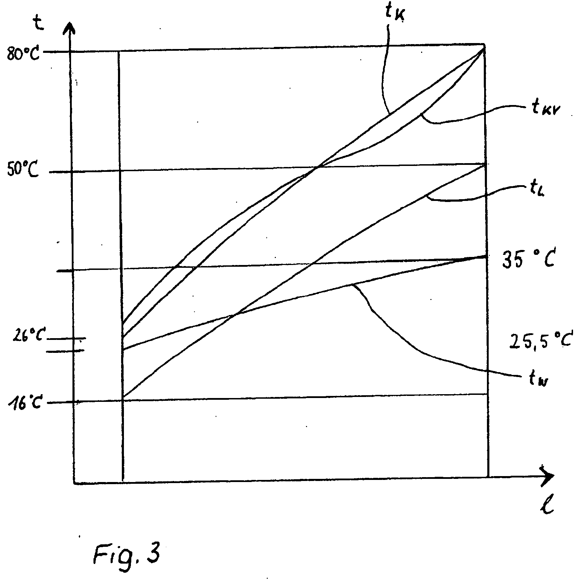

Gemäß Fig. 3 ist beispielhaft der Temperaturverlauf des Kältemittels und des Wärmeträgermediums aufgezeigt. Die bereits im Luft/Luft-Wärmeaustauscher 200 auf ca. 18 °C vorerwärmte Luft strömt nach dem Luft/Luft-Wärmeaustauscher, vom Zuluftventilator 221 angetrieben, durch den Lufterhitzer 230 für Luft. Im Falle einer ca. 18 °C aufweisenden Temperatur $t_{Ga}$ der Zuluft ZU wird bei einem zumindest teilweise in dem Gegenstrom arbeitenden Lufterhitzer 230 an dieser Stelle das Wärmeträgermedium abgekühlt. Weiterhin wird das Wärmeträgermedium im Vorheizer 270 weiter abgekühlt

Das Kältemittel wird mit etwa 26 °C aus dem Gaskühler 170 für das Wärmeträgermedium austreten. Auf der Eingangsseite des Kältemittels tritt das Kältemittel mit einer Temperatur $T_{0a}$ von ca. 80 °C in den Gaskühler 170 für das Wärmeträgermedium ein. Die Zuluft wird im Fallbeispiel von -15 °C auf eine Temperatur von wenigstens 40 °C, insbesondere auf ca. 50 °C erwärmt. Im Diagramm in Fig. 2 verläuft der Anstieg der Lufttemperatur $T_{Ge}$ von ca. 16 °C auf einen Temperaturwert $t_{Ga}$ auf ca. 50 °C. Der Eingangswert der Temperatur des Kältemittels $t_{0e}$ beträgt ca. 80 °C und der Ausgangswert der Temperatur des Kältemittels $t_{0a}$ bar beträgt ca. 26 °C. Der idealisierte Temperaturverlauf des Kältemittels ist in Fig. 3 mit $t_k$ ideal bezeichnet und ein möglicher realer Verlauf der Temperatur über eine Länge l des Gaskühlers 170 für Luft des Kältemittels $CO_2$ ist als $t_{kv}$ bezeichnet. Beide Temperaturverläufe $t_k$ real und $t_{kv}$ weisen keine Temperatursprünge oder abrupten Temperaturänderungen auf. Bei diesem Temperaturabfall von ca. 80 °C auf ca. 26 °C verliert das Kältemittel entsprechende Enthalpie von ca. 180 - 300 kj/kg, entsprechende Wärme wird über das Wärmeträgermedium an die Luft übertragen. Auch der Temperaturverlauf $t_L$ erfolgt ohne weitere Sprünge. So verhält es sich auch, wenn eine Warmwasserbereitung erfolgt. Nur ist hier der Temperaturunterschied zumindest zu Anfang der Warmwasserbereitung geringer, die bei ca. 35 °C beginnen sollte, damit ein vernünftiges Duschen oder Ähnliches erfolgen kann. Das Warmwasser soll in der Temperatur $t_w$ auf vorteilhaft wenigstens 50 °C angehoben werden. Im Lufterhitzer 270 wird das Wärmeträgermedium vorteilhaft nochmals weiter gekühlt. Das so abgekühlte Wärmeträgermedium unterkühlt vorzugsweise das Kältemittel im Gaskühler.

Vorteilhaft ist der Luft-Luft-Wärmeübertrager als Kreuz-Gegenstromwärmeaustauscher oder Gegenstromwärmeaustauscher ausgebildet.

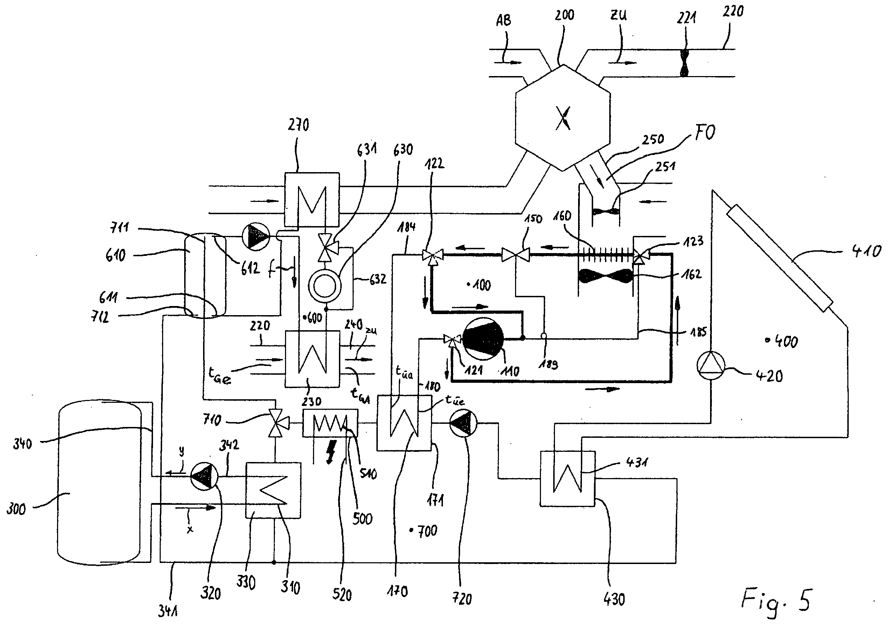

Fig. 5 zeigt eine Ausführungsform der Erfindung im Abtaubetrieb.

**Patentansprüche**

1. Verfahren zum Betrieb eines Lüftungsheizgerätes (1) mit Wärmerückgewinnung, in dem Außenluft (AU) über einen Luft/Luft-Wärmeübertrager (200) geführt wird, die Außenluft (AU) im Wärmeübertrager (200) Wärme von einer Abluft (AB) aufnimmt, aus dem Luft/Luft-Wärmeübertrager (200) Fortluft (FO) als Wärmequelle auf einen Verdampfer (160) einer Wärmepumpe geleitet ist. um ein in einem Kältemittelkreislauf (100) enthaltenes Kältemittel zu verdampfen, und zur Fortluft (FO) Außenluft (AU) für einen ausreichenden Energieinhalt beigemischt werden kann, **gekennzeichnet durch** die Verfahrensschritte,

   - dass die vom Luft/Luft-Wärmeübertrager (200) erwärmte Zuluft (ZU) mit einer ersten Temperatur ($t_{Ge}$)von ca. 15 - 20 °C in einem Lufterhitzer (230) auf eine zweite Temperatur ($t_{Ga}$) erwärmt wird, die über einer Temperatur ($t_{AB}$) der Abluft (AB) liegt.
   - in einem Gaskühler (170) eines Wärmeaustauschers (171) $CO_2$ als Kältemittel in einem überkritischen Zustand Wärme an ein Wärmeträgermedium abgibt,
   - im Gaskühler (170) das Kältemittel von einem ersten Zustand mit einer ersten Temperatur ($t_{Üe}$), die überkritisch ist, auf einen zweiten Zustand mit einer zweiten Temperatur ($t_{Üa}$) bei einem nahezu isobaren Druck, der zwischen ca. 73,8 bar und 90 bar liegt, abgekühlt wird,
   - dass das $CO_2$ in seiner Strömungsrichtung (c) vor dem Verdampfer (160) **durch** eine Drossel (150) auf einen Druck unterhalb von 73 bar expandiert wird und
   - dass das Wärmeträgermedium in dem Lufterhitzer (230) Wärme an die Zuluft (ZU) abgibt

2. Verfahren nach Anspruch 1, enthaltend den Verfahrensschritt,

   - dass das $CO_2$ in einer Strömungsrichtung (c) entgegen der Strömungsrichtung des Wärmeträgermediums in den Gaskühler (170) des Wärmeaustauschers 171 strömt, wobei sich das $CO_2$ in einem Temperaturband zwischen ca. 90 und ca. 20 °C, insbesondere zwischen 80 °C und 25 °C, kontinuierlich abkühlt, und das Wärmeträgermedium im Gaskühler (170) in einem Temperaturband mit einem unteren ersten Temperaturwert ($t_{Ge}$) von ca. 15 - ca. 20 °C und einem oberen zweiten Temperaturwert ($t_{Ga}$) von ca. 25 - ca. 60 °C, insbesondere 30 bis 50 °C, kontinuierlich erwärmt wird, so dass sich die Temperaturverläufe des sich erwärmenden Wärmeträgermediums und des sich abkühlenden $CO_2$ aneinander anschmiegen und eine Zunahme der Entropie und ein Verlust an Exergie bei der Wärmeübertragung minimiert sind.

**3.** Verfahren nach Anspruch 1 oder 2. enthaltend den Verfahrensschritt.

- dass die Drehzahl zumindest eines Verdichters (110) des Kältemittelkreislaufs (100) für einen kontinuierlichen Betrieb des Lüftungsheizgerätes (1) über ein Zeitintervall ohne Ein- und Ausschalten, ohne dabei an eine konstante Temperatur ($t_{Ga}$) der Zuluft (ZU) gebunden zu sein, abhängig von einem erforderlichen Wert geregelt ist, insbesondere abhängig von einem Wert eines Leistungsbedarfs, eines Hochdrucks der Wärmepumpe oder einer Temperatur wie der Temperatur ($t_{AU}$) der Außenluft (AU) oder wie der Temperatur($t_R$) der Raumluft.

**4.** Verfahren nach einem der Ansprüche 1, 2 oder 3, enthaltend den Verfahrensschritt,

- dass das Wärmeträgermedium in einem Vorheizer (270), der in Strömungsrichtung (f) des Wärmeträgermediums hinter dem Lufterhitzer (230) liegt, gerade so viel Enthalpie (E) zur Abkühlung des Wärmeträgermediums vor dem Luft/Luft-Wärmeübertrager (200) an die strömende Außenluft (AU) abgibt, dass wenigstens ein Einfrieren des Luft/Luft-Wärmeübertragers (200) verhindert ist, insbesondere bei tiefen Temperaturen ($t_{AU}$) der Außenluft (AU) unter -5 °C, dass entweder die Temperatur ($t_{Ga}$) der Zuluft (ZU) ein Wert ist, mit dem die Drehzahl des Verdichters (110) derart geregelt wird, dass der Luft/Luft-Wärmetauscher (200) nicht einfriert, oder sofern hierzu eine höhere Leistung und/oder Drehzahl des Verdichters (110) benötigt wird, die Temperatur ($t_{AU}$) der Außenluft (AU) hinter dem Vorheizer auf eine Temperatur ($t_{AU}$) von mindestens -5 - +3 °C, insbesondere ca. 0 °C gebracht wird.

**5.** Verfahren nach einem der vorhergehenden Ansprüche,

- enthaltend eine Abtauphase des Verdampfers (160), wobei nach Erkennung einer unzulässig starken Vereisung des Verdampfers (160) eine Heißgasbypass-Abtauung erfolgt, wobei der Gaskühler (170) umgangen wird und beim Abtauen kein Kältemittel durch den Gaskühler (170) geführt ist, wodurch eine Abkühlung des Wärmeträgermediums beim Abtauen zumindest vermindert oder vermieden ist und die Lüftung beim Abtauen weiter erfolgt, insbesondere mit einem kleineren Luftvolumenstrom durch den Luft/Luft-Wärmeübertrager (200) als im Heizbetrieb oder das Wärmeträgermedium aus einem Puffer zum Lufterhitzer strömt.

**6.** Verfahren nach einem der vorhergehenden Ansprüche, enthaltend dass in einem Zeitraum vor einer Warmwasserbereitung, bei der das Kältemittel durch den Gaskühler (170) und das Wärmeträgermedium durch einen Warmwasserwärmeaustauschers (330) für Warmwasser geleitet ist, zeitweise eine Anhebung der Temperatur ($t_{GA}$) der Zuluft (ZU) über den berechneten Solltemperaturwert der Zuluft (ZU) oder der Raumtemperatur ($t_R$) hinaus erfolgt, so dass ein Gebäude vor der Warmwasserbereitung überheizt wird und sich während der Warmwasserbereitung etwa auf die gewünschte Raumtemperatur ($t_R$) abkühlt, und dass während der Warmwasserbereitung zumindest zeitweise keine Wärme an die Zuluft (ZU) abgegeben wird.

**7.** Lüftungsheizgerät (1), mit einem Luft/Luft-Wärmeübertrager (200) zur Übertragung von Wärmeenergie aus einem Abluftstrom (AB) aus zu beheizenden Räumen auf einen Außenluftstrom (AU), mit einem in einer Wärmepumpe in einem Kältemittelkreislauf (100) angeordneten Verdampfer (160), der mit einem Fortluftstrom (FO) aus einem Fortluftkanal (250) beaufschlagbar ist, mit einer Öffnung (161) für Außenluft vor dem Verdampfer (160), durch die die Außenluft (AU) in die Fortluft (FO) für einen ausreichenden Energieinhalt als Wärmequelle beigemischt werden kann, **dadurch gekennzeichnet,**

- **dass** ein Gaskühler (170) des Kältemittelkreislaufs (100) in einem Wärmeträgermittelkreislauf angeordnet ist, der einen Lufterhitzer (230) aufweist, der in einem Zuluftkanal (220) angeordnet ist,
- der Lufterhitzer (230) in Luftströmungsrichtung einer Zuluft (ZU) hinter dem Luft/Luft-Wärmeübertrager (200) angeordnet ist,
- im Kältemittelkreislauf $CO_2$ als Kältemittel enthalten ist
- und Wärme vom überkritischen $CO_2$ als Kältemittel erst auf das Wärmeträgermedium im Wärmeträgerkreislauf und dann im Lufterhitzer (230) auf die Zuluft (ZU) hinter dem Luft/Luft-Wärmeübertrager (200) übertragen wird.

**8.** Lüftungsheizgerät (1), nach Anspruch 7, bei dem im Wärmeträgerkreislauf ein Puffer enthalten ist, der vom Wärmeträgermedium mittels einer Pumpe durchströmbar ist, wobei der Lufterhitzer (230) in Strömungsrichtung vor dem Vorheizer (270) angeordnet ist und gegebenenfalls ein Heizkreis insbesondere zwischen dem Lufterhitzer (230) und dem Vorheizer (270) eingebunden vorgesehen ist, der einen Bypass aufweist.

**9.** Gebäude, mit einem Lüftungsheizsystem nach einem der vorhergehenden Ansprüche,
**dadurch gekennzeichnet,**
**dass** das Gebäude mit Luft beheizt wird, einen spezifischen Wert des Wärmebedarfs ($Q_a$) von weniger als ca. 20 kWh/m$^2$ pro Jahr aufweist und dass das Lüftungsheizgerät des Gebäudes eine spezifische Heizleistung von ca. 5 bis 20 W/m$^2$, insbesondere 7 bis 15 W/m$^2$ aufweist.

**Claims**

**1.** Process for the operation of a heating and ventilation unit (1) with heat recovery, into which outside air (AU) is routed over an air/air heat exchanger (200), where outside air takes up heat from exhaust air (AB) in the heat exchanger (200), from which entrained air (F0) is routed to an evaporator (160) of a heat pump to an air/air heat exchanger (200) as a heat source, in order to evaporate a refrigerant medium contained in a refrigerant circuit (100), and where entrained air (F0) can be added to the outside air (AU) for a sufficient heat energy content, identified by the process steps,

- that the supply air (ZU) warmed-up by the air/air heat exchanger (200) with a primary temperature ($t_{Ge}$) of approx. 15 - 20°C is warmed up in an air heater (230) to a secondary temperature ($t_{Ga}$) which is higher than a temperature ($t_{AB}$) of the exhaust air (AB),
- that, in a gas cooler (170) of a heat exchanger (171), $CO_2$ as a refrigerant medium in a heat transfer medium gives up heat in a supercritical status,
- that, in the gas cooler (170) the refrigerant medium, from an initial status with a first temperature ($t_{Üe}$) which is supercritical, is cooled down to a second status with a second temperature ($t_{Üa}$) with an almost isobaric pressure which has a value between approx. 73.8 bar and 90 bar,
- that the $CO_2$ is expanded in its direction of flow (c) upstream of the evaporator (160) through a throttle (150) to a pressure below 73 bar and
- that the heat transfer medium in the air heater (230) gives heat to the supply air (ZU)

**2.** Process according to Claim 1,
including the process step,

- that the $CO_2$ flows into the gas cooler (170) of the heat exchanger 171 in a direction of flow (c) counter to the direction of flow of the heat transfer medium, where the $CO_2$ cools down continuously in a temperature band between approx. 90°C and approx. 20°C, in particular between 80°C and 25°C, and the heat transfer medium in the gas cooler (170) is continuously warmed up in a temperature band with a lower first temperature level ($t_{Ge}$) from approx. 15 - 20°C and an upper second temperature level ($t_{Ga}$) of approx. 25 - approx. 60°C, in particular 30 to 50°C, so that the temperature characteristics of the warming-up heat transfer medium and the cooling $CO_2$ mingle with each other and an increase of the entropy and a loss of exergy are minimized with the heat transfer.

**3.** Process according to Claim 1 or 2,
including the process step,

- that the rotation speed of at least one compressor (110) of the refrigerant circuit (100) is controlled for a continuous operation of the heating and ventilation unit (1) over a time period without switching on and off, without in this case being linked to a constant temperature ($t_{Ga}$) of the supply air (ZU), dependent on a required value, in particular dependent on a value of a power requirement, a high pressure of the heat pump or a temperature such as the temperature ($t_{AU}$) of the outside air (AU), or the temperature ($t_R$) of the room air.

**4.** Process according to one of the Claims 1, 2 or 3,
including the process step,

- that the heat transfer medium in a pre-heater (270), which flows in the direction of flow (f) of the heat transfer medium downstream of the air heater (230), for the cooling of the heat transfer medium before the air/air heat exchanger (200), gives up such an amount of enthalpy (E) to the flowing outside air (AU) that a freezing of the air/air heat exchanger (200) is prevented at least, in particular with very low temperatures ($t_{AU}$) of the outside air (AU) below
- 5°C, that the temperature ($t_{Ga}$) of the supply air (ZU) is either a value with which the rotation speed of the compressor (110) is controlled in such a way that the air/air heat exchanger (200) does not freeze, or provided that a higher performance and/or rotation speed of the compressor (110) is required so that the temperature ($t_{AU}$) of the outside air (AU) downstream of the pre-heater is brought to a temperature ($t_{AU}$) of at least -5°C - +3°C, in particular approx. 0°C.

**5.** Process according to one of the preceding Claims,

- including a defrosting phase of the evaporator (160), where, after identification of an inadmissibly severe icing of the evaporator (160), a hot gas bypass defroster is implemented where the gas cooler (170) is bypassed and, in case of defrosting, no refrigerant medium is routed through the gas cooler (170), through which any cooling of the heat transfer medium is at least decreased or is avoided during defrosting, and the ventilation during defrosting continues, in particular with a smaller air flow rate through the air/air heat exchanger (200) than in the heating operation, or the heat transfer medium flows from a buffer to the air pre-heater.

6. Process according to one of the preceding Claims, including the fact that, in a period before a hot-water preparation, with which the refrigerant medium is routed through the gas cooler (170) and the heat transfer medium through a hot-water heat exchanger (330) for hot water, an increase of the temperature ($t_{GA}$) of the supply air (ZU) temporarily occurs above the calculated setpoint temperature value of the supply air (ZU) or the room temperature ($t_R$), so that a building is overheated before the hot-water preparation and is cooled down during the hot-water preparation to approx. the required room temperature ($t_R$), and that, during the hot-water preparation, no heat is given at least temporarily to the supply air (ZU).

7. Heating and ventilation unit (1),
with an air/air heat exchanger (200) for the transfer of thermal energy from an exhaust air flow (AB) from rooms to be heated to an outside airflow (AU), with an evaporator (160) arranged in a heat pump in a refrigerant circuit (100), which is capable of being impinged by an entrained air flow (FO) from an exhaust air duct (250) with an opening (161) for outside air upstream of the evaporator (160), through which the outside air (AU) can be added into the entrained air (FO) for a sufficient energy content as a heat source,
identified by the fact

- that a gas cooler (170) of the refrigerant circuit (100) is arranged in a heat transfer medium circuit, which indicates an air heater (230), which is arranged in a supply air duct (220),
- that the air heater (230) is arranged in the air flow direction of a supply air (ZU) flow downstream of the air/air heat exchanger (200),
- that $CO_2$ is included in the refrigerant circuit as refrigerant media
- and that heat from the supercritical $CO_2$ as refrigerant media is transferred first to the heat transfer medium in the heat transfer medium circuit, and then to the supply air (ZU) in the air/air heat exchanger (200) downstream of the air heater (230)

8. Heating and ventilation unit (1), according to Claim 7, where a buffer is arranged in the heat transfer medium circuit, which is capable of being flowed through by the heat transfer medium by means of a pump, where the air heater (230) is arranged in the direction of flow upstream of the pre-heater (270) and possibly a heating circuit is provided, in particular between the air heater (230) and the pre-heater (270), which indicates a bypass.

9. Building, with a ventilation heating system according to one of the preceding Claims,
identified by the fact
that the building is heated with air which indicates a specific value of the heat requirement ($Q_a$) of less than approx. 20 kWh/m$^2$ per annum, and that the heating and ventilation unit of the building indicates a specific heating capacity of approx. 5 to 20 W/m$^2$, in particular
7 to 15 W/m$^2$.

**Revendications**

1. Procédé de fonctionnement d'un dispositif de chauffage par ventilation (1) avec récupération de chaleur dans lequel l'air extérieur (AU) est conduit à travers un diffuseur de chaleur air/air (200), l'air extérieur (AU) dans le diffuseur de chaleur (200) absorbe la chaleur issue d'un air d'extraction (AB), l'air rejeté (FO) depuis le diffuseur de chaleur air/air (200) est dirigé comme source de chaleur sur un évaporateur (160) d'une pompe à chaleur afin d'évaporer un réfrigérant contenu dans un circuit de réfrigérant (100), et de l'air extérieur (AU) peut être mélangé à l'air rejeté (FO) pour un contenu énergétique suffisant,
**caractérisé par**
les étapes du procédé selon lesquelles

- l'air soufflé (ZU) chauffé par le diffuseur de chaleur air/air (200) d'une température première ($t_{Ge}$) approximative de 15 à 20 °C est chauffé dans un réchauffeur d'air (230) à une température seconde ($t_{Ga}$) supérieure à une température ($t_{AB}$) de l'air d'extraction (AB).
- dans un refroidisseur de gaz (170) d'un échangeur de chaleur (171), du $CO_2$ fournit, en tant que réfrigérant à l'état supercritique, de la chaleur à un fluide caloporteur,
- dans le refroidisseur de gaz (170), le réfrigérant est refroidi d'un état premier à une température ($t_{Üe}$) supercritique à un état second à une température ($t_{Üa}$) sous une pression quasi isobare située entre environ 73,8 bar et 90 bar,
- le $CO_2$ est, dans son sens d'écoulement (c), expansé avant l'évaporateur (160) par une bobine (150) sous une pression inférieure à 73 bar et
- le fluide caloporteur dans le réchauffeur d'air (230) délivre de la chaleur à l'air soufflé (ZU)

**2.** Procédé selon la revendication 1 contenant l'étape du procédé selon laquelle

- le $CO_2$ s'écoule, dans un sens d'écoulement (c) contraire au sens d'écoulement du fluide caloporteur dans le refroidisseur de gaz (170) de l'échangeur de chaleur 171, le $CO_2$ se refroidissant continuellement dans une plage de températures située entre environ 90 °C et environ 20 °C, en particulier entre 80 °C et 25 °C, et le fluide caloporteur étant continuellement chauffé dans le refroidisseur de gaz (170) dans une plage de températures avec pour valeur de température inférieure première ($t_{Ge}$) environ 15 à environ 20 °C et pour valeur de température supérieure seconde ($t_{Ga}$) environ 25 à environ 60 °C, en particulier de 30 à 50 °C, de manière à ce que les variations de température du fluide caloporteur en cours de réchauffement et du $CO_2$ en cours de refroidissement s'épousent et à ce que l'absorption de l'entropie et une perte d'exergie soient minimisés pendant la transmission de chaleur.

**3.** Procédé selon les revendications 1 ou 2 contenant l'étape du procédé selon laquelle

- la vitesse de rotation d'au moins un compresseur (110) du circuit de réfrigérant (100) est réglée pour un fonctionnement continu du dispositif de chauffage par ventilation (1) pendant un intervalle de temps sans mise en marche ni arrêt, sans être liée à une température constante ($t_{Ga}$) de l'air soufflé (ZU) en fonction d'une valeur obligatoire, en particulier en fonction d'une valeur d'une puissance appelée, d'une haute pression de la pompe à chaleur ou d'une température comme la température ($t_{AU}$) de l'air extérieur (AU) ou comme la température ($t_R$) de l'air ambiant.

**4.** Procédé selon l'une des revendications 1, 2 ou 3 contenant l'étape du procédé selon laquelle

- le fluide caloporteur délivre dans un préchauffeur (270), situé derrière le réchauffeur d'air (230) dans le sens d'écoulement (f), la juste enthalpie (E) pour le refroidissement du fluide caloporteur avant le diffuseur de chaleur air/air (200) à l'air extérieur qui le traverse (AU), de manière à prévenir au moins une congélation du diffuseur de chaleur air/air (200), en particulier sous des températures très basses ($t_{AU}$) de l'air extérieur (AU) inférieures à -5 °C, de sorte que, soit la température ($t_{Ga}$) de l'air soufflé (ZU) soit une valeur avec laquelle la vitesse de rotation du compresseur (110) est réglée de manière à ce que le diffuseur de chaleur air/air (200) ne gèle pas, soit, si une plus grande puissance et/ou vitesse de rotation du compresseur (110) est nécessaire, la température ($t_{AU}$) de l'air extérieur (AU) derrière le préchauffeur soit amenée à une température ($t_{AU}$) d'au moins -5 à +3 °C, en particulier à environ 0 °C.

**5.** Procédé selon l'une des revendications précédentes,

- contenant une phase de dégivrage de l'évaporateur (160), **caractérisé en ce que**, après détection d'un givrage intolérablement fort de l'évaporateur (160), un dégivrage du bypass gaz chaud a lieu, **en ce que** le refroidisseur de gaz (170) est contourné et **en ce qu'**aucun réfrigérant ne traverse le refroidisseur de gaz (170) pendant le dégivrage, de manière à au moins diminuer ou prévenir un refroidissement du fluide caloporteur pendant le dégivrage et à poursuivre la ventilation pendant le dégivrage, en particulier avec un débit volumique d'air à travers le diffuseur de chaleur air/air (200) inférieur à celui pendant le mode chauffe, ou **en ce que** le fluide caloporteur s'écoule depuis un tampon vers le préchauffeur d'air.

**6.** Procédé selon l'une des revendications précédentes, **caractérisé en ce que**, au cours d'une période précédant une production d'eau chaude pendant laquelle le réfrigérant est conduit à travers le refroidisseur de gaz (170) et le fluide caloporteur à travers un échangeur de chaleur (330) pour eau chaude, une augmentation temporaire de la température ($t_{GA}$) de l'air soufflé (ZU) au-delà de la valeur de température de consigne calculée de l'air soufflé (ZU) ou de la température ambiante ($t_R$) se produit, de sorte qu'un bâtiment soit surchauffé avant la production d'eau chaude et refroidit à peu près à la température ambiante ($t_R$) souhaitée pendant la production d'eau chaude, et de sorte que, pendant la production d'eau chaude, aucune chaleur ne soit délivrée au moins temporairement à l'air soufflé (ZU).

**7.** Dispositif de chauffage par ventilation (1), présentant un diffuseur de chaleur air/air (200) pour la transmission d'énergie thermique depuis un courant d'air d'extraction (AB) de pièces à chauffer à un courant d'air extérieur (AU), présentant un évaporateur (160) disposé dans une pompe à chaleur dans un circuit de réfrigérant (100) qui peut être parcouru par un courant d'air rejeté (FO) depuis un canal d'air rejeté (250), présentant une ouverture (161) pour l'air extérieur avant l'évaporateur (160) à travers laquelle l'air extérieur (AU) peut être mélangé à l'air rejeté (FO) pour un contenu énergétique suffisant comme source de chaleur, **caractérisé en ce que**,

- un refroidisseur de gaz (170) du circuit de réfrigérant (100) est disposé dans un circuit de fluide caloporteur présentant un réchauffeur d'air (230) disposé dans un canal d'air soufflé (220),
- le réchauffeur d'air (230) est disposé dans le sens d'écoulement d'un air soufflé (ZU) derrière le diffuseur de chaleur air/air (200),
- du $CO_2$ est contenu en tant que réfrigérant dans le circuit de réfrigérant
- la chaleur du $CO_2$ supercritique en tant que réfrigérant est diffusée d'abord au fluide caloporteur dans le circuit caloporteur et ensuite dans le réchauffeur d'air (230) à l'air soufflé (ZU) derrière le diffuseur de chaleur air/air (200).

8. Dispositif de chauffage par ventilation (1) selon la revendication 7, **caractérisé en ce que** dans le circuit caloporteur se trouve un tampon pouvant être parcouru par le fluide caloporteur à l'aide d'une pompe, **en ce que** le réchauffeur d'air (230) est disposé dans le sens d'écoulement avant le préchauffeur (270) et **en ce que**, le cas échéant, un circuit de chauffage est prévu en particulier en connexion entre le réchauffeur d'air (230) et le préchauffeur (270) et présente un bypass.

9. Bâtiment équipé d'un système de chauffage par ventilation selon l'une des revendications précédentes, **caractérisé en ce que**,
le bâtiment est chauffé par de l'air, présente une valeur spécifique de besoin calorifique ($Q_a$) de moins de 20 kWh/m$^2$ environ par an et **en ce que** le dispositif de chauffage par ventilation du bâtiment présente une puissance calorifique d'environ 5 à 20 W/m$^2$, en particulier entre 7 et 15 W/m$^2$.

Fig. 1

Fig. 2

Fig. 3

Fig. 4

Fig. 5

EP 2 821 727 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005002282 A1
- DE 19702903 C2

- WO 2007080162 A2